# EUROPEAN PATENT APPLICATION

(11) **EP 4 516 950 A1**
(43) Date of publication of application: **05.03.2025**
(21) Application number: 23937782.3
(22) Date of filing: 30.06.2023
(51) Int. Cl.: C22B 23/00

(54) **SHORT-PROCESS NICKEL-COBALT-MANGANESE CO-EXTRACTION PROCESS FOR HYDROMETALLURGY OF LATERITIC NICKEL ORE**

(71) Applicant: PT QMB New Energy Materials, Jakarta 12950 (ID); PT ESG New Energy Material, Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen, Guangdong 518101 (CN); BRODJONEGORO, SATRYO SOEMANTRI, Provinsi DKI Jakarta (ID); LIU, Wei, Provinsi DKI Jakarta (ID); AJI, TEGAR MUKTI, Provinsi DKI Jakarta (ID); WANALDI, RIZKY, Provinsi DKI Jakarta (ID); RAHMADI, PIYAN, Provinsi DKI Jakarta (ID); SALIM, EMIL, Provinsi DKI Jakarta (ID); HASIBUAN, ANDI SYAPUTRA, Provinsi DKI Jakarta (ID)
(74) Representative: Ipside
(86) International application number: PCT/CN2023/105015
(87) International publication number: WO 2025/000486

(57) **Abstract**

A short-flow nickel-cobalt-manganese co-extraction process for laterite nickel ore hydro metallurgy falls within the technical field of hydrometallurgy. The process includes the following steps: co-extracting an iron-aluminum removal leaching solution of the laterite nickel ore by using an organic acid extraction system to obtain an enriched nickel-cobalt-manganese solution; extracting impurities from the enriched nickel-cobalt-manganese solution by using a P204 extraction system to obtain a high-purity nickel-cobalt-manganese solution. The co-extraction process of the disclosure simplifies the current hydrometallurgical process flow for extracting nickel-cobalt-manganese from the laterite nickel ore, greatly reduces the acid, alkali, and extractant usage, energy consumption, and water consumption in the extraction process, and reduces the cost of nickel-cobalt-manganese extraction, which is of great significance for the industrial production of ternary nickel-cobalt-manganese raw materials. At the same time, the process of the disclosure can achieve the co-extraction of nickel-cobalt-manganese, with high-purity of nickel-cobalt-manganese and low loss of nickel-cobalt, and the obtained high-purity nickel-cobalt-manganese solution is adjusted according to the proportion of nickel-cobalt-manganese metal in the ternary precursor product, and is finally used for preparing a nickel-cobalt-manganese ternary cathode material.

## Description

### FIELD OF THE DISCLOSURE

The disclosure relates to the technical field of hydrometallurgy, in particular to a short-flow nickel-cobalt-manganese co-extraction process for laterite nickel ore hydro metallurgy.

### BACKGROUND

The rapid growth of the global new energy automotive industry has led to the development of ternary NCM lithium batteries. However, nickel and cobalt resources in the ternary NCM cathode materials used in lithium batteries are limited. With the depletion of nickel sulfide resources, laterite nickel ore has become an important development direction of nickel and cobalt resource mining. China has long relied mainly on importing laterite nickel ore from abroad, which obviously increases the cost of nickel and cobalt raw material extraction. In laterite nickel ores, limonite-type laterite nickel ores have a low grade (less than 1.3%) and contain a large amount of impurities such as iron, aluminum, chromium, zinc, scandium, calcium, copper, manganese, and magnesium. However, the concentrations of Fe, Cr, Cu, and Zn in the cathode material of ternary lithium batteries need to be controlled to 1 ppb level, which imposes high requirements on the purity of nickel-cobalt-manganese raw materials. How to prepare battery-grade nickel-cobalt-manganese sulfate raw material with low cost and high efficiency becomes the decisive factor for the further market of ternary power batteries.

Compared with the precipitation method and resin method, the solvent extraction method is more suitable for extracting target metals from solutions rich in various impurities. At present, high-purity battery-grade nickel-cobalt sulfate raw material at home and abroad is obtained mainly through high-pressure leaching of laterite nickel ore, two-stage neutralization for iron-aluminum removal, two-stage MHP precipitation (nickel-cobalt hydroxide), acid dissolution, impurity extraction by P204, cobalt extraction by P507, magnesium extraction by P507 or deep impurity removal by P507/C272, preparation of battery-grade nickel-cobalt sulfate process. However, this process is lengthy, and tedious, has a high loss rate of nickel and cobalt, and the precipitation of MHP requires the consumption of a large amount of liquid alkali, which significantly increases the recovery cost of nickel and cobalt.

Based on this, some researchers suggested using HBL116, HBL110, and a co-extraction system to directly extract nickel-cobalt-manganese from a high-pressure acid-leaching solution of laterite nickel ore by the one-step extraction process, and then preparing NCM ternary precursor by further proportioning. However, the extraction rate of copper and zinc, especially copper, is significantly higher than that of nickel and cobalt for such non-single-component compound extractant, and a large amount of iron, aluminum, and chromium impurities and some zinc are present in the acid leaching solution itself, wherein chromium can easily poison the extractant, which results in the impurity concentration of the finally obtained nickel-cobalt sulfate product being higher than the standard value, and affects the normal operation of the extraction system. In addition, researchers have attempted to remove iron, chromium, and aluminum directly from the acid-leaching solution using P204 before extracting nickel and cobalt by an extraction process. However, the large amount of water in the two extraction processes greatly reduces the production efficiency and limits the industrial operation of the process.

### SUMMARY

The object of the disclosure is to overcome the above-mentioned technical deficiencies and propose a short-flow nickel-cobalt-manganese co-extraction process for laterite nickel ore hydrometallurgy, so as to solve the technical problems in the prior art of extracting nickel and cobalt from a laterite nickel ore, such as a complicated process, large consumption of alkali and water, and low purity of the extracted nickel and cobalt, and a large loss of nickel and cobalt.

The disclosure provides a short-flow nickel-cobalt-manganese co-extraction process for laterite nickel ore hydrometallurgy, comprising the following steps:
step S1, co-extracting an iron-aluminum removal leaching solution of the laterite nickel ore by using an organic acid extraction system to obtain an enriched nickel-cobalt-manganese solution; and
step S2, extracting impurities from the enriched nickel-cobalt-manganese solution by using a P204 extraction system to obtain a high-purity nickel-cobalt-manganese solution.

Compared with the prior art, the disclosure has the following beneficial effects:

The co-extraction process of the disclosure simplifies the current hydrometallurgical process flow for extracting nickel-cobalt-manganese from the laterite nickel ore, greatly reduces the large consumption of acid, alkali, extractant, and water, and energy consumption in nickel-cobalt-manganese extraction, and reduces the cost of nickel-cobalt-manganese extraction, which is of great practical significance for the industrial production and application of ternary nickel-cobalt-manganese raw materials. At the same time, the process of the disclosure can achieve the co-extraction of nickel-cobalt-manganese, with high purity of nickel-cobalt-manganese and low loss of nickel-cobalt, and the finally obtained high-purity nickel-cobalt-manganese sulfate solution can be directly used for preparing a nickel-cobalt-manganese ternary cathode material.

### BRIEF DESCRIPTION OF THE DRAWINGS

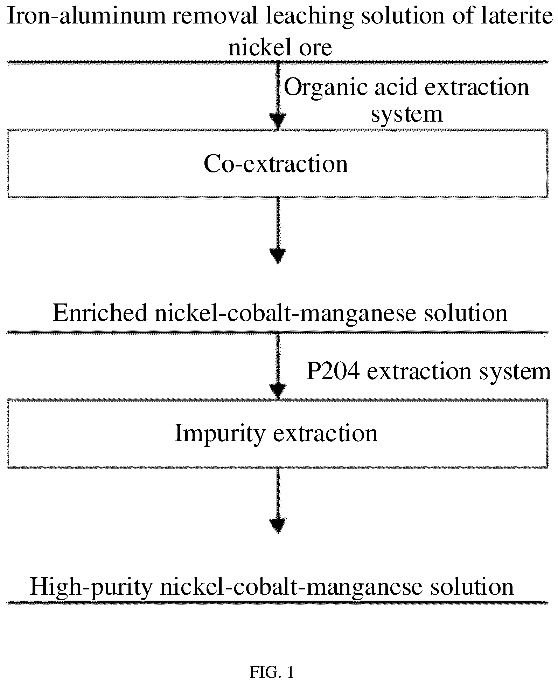

FIG. 1 is a process flow diagram of an embodiment of a short-flow nickel-cobalt-manganese co-extraction process for laterite nickel ore hydrometallurgy in accordance with the disclosure.

### DETAILED DESCRIPTION OF PREFERRED EMBODIMENTS

In order that the objects, aspects, and advantages of the disclosure will become more apparent, a more particular description of the disclosure will be rendered by reference to the drawings and embodiments. It should be understood that the particular embodiments described herein are illustrative only and are not restrictive.

The disclosure provides a short-flow nickel-cobalt-manganese co-extraction process for laterite nickel ore hydrometallurgy, comprising the following steps:
step S1, co-extracting an iron-aluminum removal leaching solution of the laterite nickel ore by using an organic acid extraction system to obtain an enriched nickel-cobalt-manganese solution; and
step S2, extracting impurities from the enriched nickel-cobalt-manganese solution by using a P204 extraction system to obtain a high-purity nickel-cobalt-manganese solution.

In the disclosure, firstly, nickel, cobalt, manganese copper, zinc as well as trace amounts of impurities such as aluminum and chromium in the iron-aluminum removal leaching solution of the laterite nickel ore are co-extracted by an organic acid extraction system, and then impurities in the enriched nickel-cobalt-manganese solution are removed by using a P204 extraction system to obtain a battery-grade nickel-cobalt-manganese sulfate product. The enrichment of nickel-cobalt-manganese and various impurities in the iron-aluminum removal leaching solution from laterite nickel ore can be achieved in the co-extraction stage, which reduced the amount of water in the impurity removal by P204 by about 30 times (when the concentration of nickel-cobalt-manganese is enriched to 120 g/L required for commercialization), which is of great practical significance for promoting the industrial production and application of nickel-cobalt-manganese ternary raw materials. The process flow is brief, the precipitation of MHP (nickel cobalt hydroxide) and acid dissolution procedure in the conventional laterite nickel ore hydrometallurgical process are omitted, simplifying the extraction stage process of extracting nickel cobalt, not only saving a large number of reagent consumption, energy consumption, and production costs, improving the recovery rates of nickel and cobalt but also greatly improving the production efficiency of nickel-cobalt-manganese product.

In the present embodiment, the above-mentioned iron-aluminum removal leaching solution from laterite nickel ore is obtained by sequentially subjecting the laterite nickel ore to high-pressure leaching, one-stage neutralization for iron-aluminum removal, and two-stage neutralization for iron-aluminum removal.

In some embodiments of the disclosure, the iron-aluminum removal leaching solution of the laterite nickel ore includes the following components: Ni 3.2-4 g/L, Co 0.32-0.48 g/L, Mn 2.6-3.5 g/L, Mg 4-5.2 g/L, Ca 0.1-0.3 g/L, Fe 0-0.001 g/L, Al 0.01-0.03 g/L, Cr 0-0.005 g/L, Sc 0.02-0.04 g/L, Zn 0.015-0.04 g/L, and Cu 0.007-0.016 g/L.

Preferably, the organic acid extraction system includes an organic acid extractant, a first diluent, and a co-solvent.

Preferably, in the organic acid extraction system, the organic acid extractant is at least one of DY319 or Versatic10, preferably DY319. The DY319 extractant used in the disclosure, with the product composition of 2-hexyldecanoic acid (C₁₆H₃₂O₂), has high selectivity for nickel-cobalt-manganese and low water solubility, can completely extract nickel and cobalt in the laterite nickel ore leaching solution. Further, the oil value of the raffinate is very low, which reduces the pressure in wastewater treatment. Also, the inventors found in experiments that as the saponification rate of the organic acid extractant decreases, the oil value gradually decreases.

Preferably, in the organic acid extraction system, the first diluent is a sulfonated coal oil and the dilution ratio of the organic acid extractant is 10-50%, including but not limited to 10%, 20%, 30%, 40%, 50%, etc.

Preferably, in the organic acid extraction system, the co-solvent is at least one of TBP and tridecyl alcohol. The disclosure can increase the solubility of the organic acid extractant in the first diluent by adding a co-solvent to promote phase separation efficiency during the extraction reaction. Further, the volume ratio of co-solvent to first diluent is 1: (3-7) including, but not limited to, 1: 3, 1: 4, 1: 5, 1: 6, 1: 7, etc.

Preferably, the organic acid extraction system is saponified prior to extraction. The saponifying agent includes any one or a combination of at least two of sodium hydroxide, nickel hydroxide (sodium hydroxide + nickel sulfate mother liquor for the saponification), or aqueous ammonia. This patent describes a liquid alkali (sodium hydroxide) commonly used in the industry today. Further, the mass fraction of the sodium hydroxide solution is 5-40%, including but not limited to 10%, 17%, 25%, 32%, 40%, etc. The sodium saponification needs to be stirred. The sodium saponification rate is 30-70%, including but not limited to 30%, 40%, 50%, 60%, 70%, etc. The number of the saponification stage is 1-2.

Preferably, the P204 extraction system includes P204 and a second diluent.

Preferably, in the P204 extraction system, the second diluent is sulfonated coal oil. The dilution rate of P204 is 10-50%, including but not limited to 10%, 20%, 30%, 40%, 50%, etc.

Preferably, the P204 extraction system is saponified prior to extraction. Further, the saponifying agent includes any one or two of sodium hydroxide, nickel hydroxide (sodium hydroxide + nickel sulfate mother liquor for the saponification), or aqueous ammonia. Furthermore, sodium saponification is performed using a sodium hydroxide solution, wherein the mass fraction of the sodium hydroxide solution is 5-40%, including but not limited to 10%, 17%, 25%, 32%, 40%, etc. The sodium saponification needs to be stirred. The sodium saponification rate is 30-70%, including but not limited to 30%, 40%, 50%, 60%, 70%, etc. The number of the saponification stage is 1-2, etc.

In this embodiment, step S1 described above specifically includes:
step S11, co-extracting the iron-aluminum removal leaching solution of the laterite nickel ore by using the organic acid extraction system to obtain a nickel-cobalt-manganese loaded organic phase;
step S12, washing the nickel-cobalt-manganese loaded organic phase by using a first washing solution, so that calcium, magnesium, and some impurities such as iron, aluminum, chromium, and scandium in the nickel-cobalt-manganese loaded organic phase are washed off to obtain an organic phase loaded with nickel-cobalt-manganese and impurities such as copper, zinc, and aluminum; and
step S13, stripping the organic phase loaded with nickel-cobalt-manganese and impurities such as copper, zinc, and aluminum by using the first stripping liquid, so that the nickel-cobalt-manganese and impurities in the organic phase loaded with nickel-cobalt-manganese and impurities such as copper, zinc and aluminum are stripped to obtain an enriched nickel-cobalt-manganese solution.

Preferably, in step S11, the phase ratio (O/A) is 1: (0.5-5) including, but not limited to, 1: 0.5, 1: 1, 1: 2, 1: 3, 1: 4, 1: 5, etc.; the extraction temperature is 20-60°C, including but not limited to 20°C, 30°C, 40°C, 50°C, 60°C, etc.; the extraction time is 2-15 min, including but not limited to 2 min, 4 min, 6 min, 8 min, 10 min, 12 min, 15 min, etc.; and the number of extraction stages is 2-10, which may be, for example, 2 stages, 3 stages, 4 stages, 5 stages, 6 stages, 7 stages, 8 stages, 9 stages, 10 stages, etc.

Preferably, in step S12, the first washing solution is a sulfuric acid solution having a concentration of 0.1-0.5 mol/L, including but not limited to 0.1 mol/L, 0.2 mol/L, 0.3 mol/L, 0.4 mol/L, 0.5 mol/L, etc.; the phase ratio (O/A) is (3-12): 1, including, but not limited to, 3: 1, 4: 1, 5: 1, 6: 1, 7: 1, 8: 1, 9: 1, 10: 1, 11: 1, 12: 1, etc.; the washing temperature is 20-60°C, including but not limited to 20°C, 30°C, 40°C, 50°C, 60°C, etc.; the washing time is 5-30 min, including but not limited to 5 min, 10 min, 15 min, 20 min, 25 min, 30 min, etc.; and the number of washing stages is 2-9, and can be, for example, 2 stages, 3 stages, 4 stages, 5 stages, 6 stages, 7 stages, 8 stages, 9 stages, etc.

Preferably, in step S12, the first washing liquid is combined with the iron-aluminum removal leaching solution of the laterite nickel ore in the co-extraction stage of the organic acid extraction system to realize the extraction and recovery of nickel-cobalt-manganese from the first washing solution.

Preferably, in step S13, the first stripping liquid is a sulfuric acid solution having a concentration of 1-3 mol/L, including but not limited to 1 mol/L, 2 mol/L, 3 mol/L, etc.; the phase ratio (O/A) is (1-35): 1, including, but not limited to, 1: 1, 5: 1, 10: 1, 15: 1, 20: 1, 25: 1, 30: 1, 35: 1, etc.; the stripping temperature is 20-60°C, including but not limited to 20°C, 30°C, 40°C, 50°C, 60°C, etc.; the stripping time is 3-30 min, including but not limited to 3 min, 5 min, 10 min, 15 min, 20 min, 25 min, 30 min, etc.; the number of stripping stages is 3-8, and may be, for example, 3 stages, 4 stages, 5 stages, 6 stages, 7 stages, 8 stages, etc.

In this embodiment, step S2 described above specifically includes:

In step S21, the enriched nickel-cobalt-manganese solution is subjected to impurity extraction by using a P204 extraction system, and copper, zinc, chromium, calcium, iron, aluminum and some manganese impurities are removed by extraction to obtain a high-purity nickel-cobalt-manganese solution.

Preferably, in step S21, the phase ratio (O/A) is 1: (0.2-2) including, but not limited to, 1: 0.2, 1: 0.5, 1: 1.5, 1: 2, etc.; the extraction temperature is 20-60°C, including but not limited to 20°C, 30°C, 40°C, 50°C, 60°C, etc.; the extraction time is 2-15 min, including but not limited to 2 min, 4 min, 6 min, 8 min, 10 min, 15 min, etc.; and the number of extraction stages is 2-13, which can be, for example, 2 stages, 3 stages, 4 stages, 5 stages, 6 stages, 7 stages, 8 stages, 9 stages, 10 stages, 11 stages, 12 stages, 13 stages, etc.

In some preferred embodiments of the disclosure, step S2 described above specifically includes:

In step S22, the loaded organic phase is washed by using a second washing solution, so that impurities such as Fe and Cr in the loaded organic phase are washed off, thereby achieving the recycling of the P204 extraction agent.

Preferably, in step S22, the second washing solution is a hydrochloric acid solution with a concentration of 0.5-2 mol/L, including but not limited to 0.5 mol/L, 1 mol/L, 1.5 mol/L, 2 mol/L, etc.; the phase ratio (O/A) is (3-13): 1, including, but not limited to, 3: 1, 4: 1, 5: 1, 6: 1, 7: 1, 8: 1, 9: 1, 10: 1, 11: 1, 12: 1, 13: 1, etc.; the washing temperature is 20-60°C, including but not limited to 20°C, 30°C, 40°C, 50°C, 60°C, etc.; the washing time is 5-30 min, including but not limited to 5 min, 10 min, 15 min, 20 min, 25 min, 30 min, etc.; and the number of washing stages is 3 to 8, and can be, for example, 3 stages, 4 stages, 5 stages, 6 stages, 7 stages, 8 stages, etc.

For the avoidance of doubt, in each of the following examples of the disclosure, the composition of the second-stage iron-aluminum removal of laterite nickel ore is shown in Table 1.

**Table 1**

| Element | Ni | Co | Mn | Mg | Ca | Fe | Al | Cr | Sc | Zn | Cu |
|---|---|---|---|---|---|---|---|---|---|---|---|
| Content (g/L) | 3.48 | 0.41 | 2.9 | 5.1 | 0.2 | 0.0005 | 0.02 | 0.003 | 0.014 | 0.03 | 0.01 |

### Example 1

(1) Preparation of DY319 extraction organic phase: DY319, tridecyl alcohol, and sulfonated coal oil were mixed in a volume ratio of 4: 1: 5 and stirred uniformly, i.e. the dilution rate of DY319 was 40%. Then, sodium saponification was carried out by using a sodium hydroxide solution with a mass fraction of 32%. The sodium saponification rate was 60%, and the number of saponification stages was 1.
(2) Nickel-cobalt-manganese co-extraction by DY319:
①A second-stage iron-aluminum removal leaching solution of the laterite nickel ore didn't need to be subjected to any treatment. The saponified DY319 extraction organic phase was mixed with the second-stage iron-aluminum removal leaching solution of the laterite nickel ore in a volume ratio of 1: 3. The extraction temperature was 45°C; the extraction time was 8 min; and the number of extraction stages was 4. The composition and oil content of the raffinate are shown in the following table 2, wherein the oil content value is the data test result of continuous operation of the extraction tank for one month. The industrial requirement for oil is <100 mg/L and it can be seen that the oil value of the raffinate is very low, significantly reducing the pressure at which the wastewater is treated.

**Table 2 Raffinate composition and oil content**

| Element | Ni | Co | **Mn** | Mg | Ca | Fe | Al | Cr | Sc | Zn | Cu | Oil content |
|---|---|---|---|---|---|---|---|---|---|---|---|---|
| Content (g/L) | 0.0008 | 0.0001 | 1.45 | 4.6 | 0.157 | 0.0001 | 0.007 | 0.0013 | 0.01 | 0.0001 | 0.0001 | 0.012-0.046 |

② The nickel-cobalt-manganese loaded organic phase DY319 was washed with 0.4 mol/L sulfuric acid solution. The volume ratio of the organic phase to sulfuric acid solution was 3: 1; the washing temperature was 45°C; the washing time was 20 min; and the number of washing stages was 5. At the same time, the washing solution was incorporated into the second-stage iron-aluminum removal leaching solution of the laterite nickel ore in the extraction stage, and the composition of the above-mentioned raffinate is the test result of the composition after incorporating the washing solution into the extraction stage.
③ The nickel cobalt manganese and impurities in the organic phase were stripped with 2.25 mol/L sulfuric acid solution. The volume ratio of the organic phase to sulfuric acid solution was controlled to be 8: 1; the stripping temperature was 45°C; the stripping time was 14 min; and the number of stripping stages was 6. The composition of the stripped enriched nickel-cobalt-manganese sulfate solution is shown in Table 3 below.

**Table 3 Composition of enriched nickel-cobalt-manganese sulfate solution**

| Element | Ni | Co | Mn | Mg | Ca | Fe | Al | Cr | Sc | Zn | Cu |
|---|---|---|---|---|---|---|---|---|---|---|---|
| Content (g/L) | 79.1 | 9.3 | 16 | <0.0007 | 0.009 | 0.0012 | 0.29 | 0.032 | 0.04 | 0.638 | 0.227 |

(3) Preparation of P204 extraction organic phase: P204 and sulfonated coal oil were mixed in a volume ratio of 1: 3 and stirred uniformly, namely, the dilution rate of P204 was 25%. Then, sodium saponification was carried out by using a 32% sodium hydroxide solution. The sodium saponification rate was 60%, and the number of saponification stages was 1.
(4) Extraction of impurity by P204:
① The saponified P204 extraction organic phase was mixed with the enriched nickel-cobalt-manganese sulfate solution at a volume ratio of 1: 1. The extraction temperature was 45°C; the extraction time was 8 min; and the number of extraction stages was 3. Fe, Al, Ca, Cu, Sc, Zn, Cr, and part of Mn in the nickel-cobalt-manganese sulfate solution were removed by extraction. The composition of the product nickel-cobalt-manganese sulfate solution after the removal of impurities is shown in Table 4 below.
② All impurities such as Cu, Zn, and Al in the loaded organic phase were washed with 1.5 mol/L hydrochloric acid. The volume ratio of the organic phase to the hydrochloric acid solution was controlled to be 11: 1; the washing temperature was 45°C; the washing time was 20 min; and the number of washing stages was 6. The washed extractant was saponified and then returned to the tank for recycling.

**Table 4 Composition of nickel-cobalt-manganese sulfate solution after impurity removal**

| Element | Ni | Co | Mn | Mg | Ca | Fe | Al | Cr | Sc | Zn | Cu |
|---|---|---|---|---|---|---|---|---|---|---|---|
| Content g/L | 74.9 | 8.16 | 11 | <0.001 | | | | | | | |

### Example 2

In the ternary nickel-cobalt-manganese cathode material, the higher the proportion of nickel and cobalt, the greater the energy and power density of the ternary battery. Ternary lithium batteries have evolved from series 5, 6 to now series 9. Therefore, in order to reduce the proportion of manganese in the nickel-cobalt-manganese sulfate solution to prepare a nickel-cobalt-manganese sulfate solution with a nickel-cobalt-manganese ratio close to 9: 1: 1, on the basis of Example 1, the volume ratio of the saponified P204 extraction organic phase to the enriched nickel-cobalt-manganese sulfate solution can be adjusted and raised to 1.4: 1, with other parameters unchanged. The composition of the obtained nickel-cobalt-manganese sulfate solution product is shown in Table 5 below.

**Table 5 Composition of enriched nickel-cobalt-manganese sulfate solution**

| **Element** | Ni | Co | Mn | Mg | Ca | Fe | Al | Cr | Sc | Zn | Cu |
|---|---|---|---|---|---|---|---|---|---|---|---|
| Content (g/L) | 73.6 | 7.7 | 8.7 | <0.001 | | | | | | | |

### Example 3

In order to reduce the proportion of manganese in the nickel cobalt manganese sulfate solution, the process of the DY319 co-extraction stage can also be adjusted on the basis of Example 1. The dilution of DY319 in the co-extraction stage was now reduced to 34%. In order to make DY319 extract completely the nickel and cobalt in the second-stage leaching solution, the saponification rate of DY319, the volume ratio of the organic phase extracted by DY319 to the second-stage iron-aluminum removal leaching solution in the laterite nickel ore, and the number of extraction stages were all kept unchanged due to the small decrease in dilution rate. The composition and oil content of the raffinate (second-stage leaching solution) after DY319 extraction are shown in Table 6 below.

**Table 6 Raffinate Composition and Oil Content**

| Element | Ni | Co | Mn | Mg | Ca | Fe | Al | Cr | Sc | Zn | **Cu** | Oil content |
|---|---|---|---|---|---|---|---|---|---|---|---|---|
| Content (g/L) | 0.0006 | 0.0001 | 1.83 | 4.75 | 0.17 | 0 | 0.005 | 0.001 | 0.008 | 0.0001 | 0.0001 | 0.018 |

It can be inferred from the composition of the raffinate that the content of Mn in the loaded organic was reduced, and the concentration of Ca and Mg impurities was also reduced. In order to prevent the elution rate of Mn in the washing stage from being too high, the ratio of the organic phase to the acid in the washing stage can be adjusted to 4: 1, and other parameters are unchanged. The composition of the enriched nickel-cobalt-manganese sulfate solution obtained is shown in Table 7 below. The concentration of nickel and cobalt enriched in the sulfuric acid solution increased due to the relatively low loss of nickel and cobalt in the impurity removal stage.

**Table 7 Composition of enriched nickel-cobalt-manganese sulfate solution**

| Element | Ni | Co | Mn | Mg | Ca | Fe | Al | Cr | Sc | Zn | Cu |
|---|---|---|---|---|---|---|---|---|---|---|---|
| Content (g/L) | 82.6 | 9.8 | 13.8 | <0.0009 | 0.01 | 0.0013 | 0.306 | 0.034 | 0.042 | 0.637 | 0.236 |

In the subsequent P204 impurity removal stage, in order to reduce the loss of nickel-cobalt-manganese during extraction, the volume ratio of the nickel-manganese sulfate loaded organic phase to the saponified extractant can be reduced to 0.7: 1, and other conditions are unchanged. The composition of the obtained nickel-cobalt-manganese sulfate solution after impurity removal is shown in Table 8 below.

**Table 8 Composition of nickel-cobalt-manganese sulfate solution after impurity removal**

| Element | Ni | Co | Mn | Mg | Ca | Fe | Al | Cr | Sc | Zn | Cu |
|---|---|---|---|---|---|---|---|---|---|---|---|
| Content (g/L) | 76.9 | 8.52 | 7.2 | <0.001 | | | | | | | |

In conclusion, the co-extraction process of the disclosure can be used to effectively adjust the proportion of manganese in the battery-grade ternary nickel-cobalt-manganese sulfate solution by jointly controlling the process conditions of the organic acid co-extraction stage and the P204 extraction stage. Specifically, in the co-extraction stage, the extraction rate of manganese under the same conditions of DY319 can be reduced by selectively reducing the dilution rate of DY319, the saponification rate, the volume ratio of the saponified DY319 extraction organic phase to the second-stage leaching solution, or any combination of at least two, thereby reducing the proportion of manganese in the enriched nickel-cobalt-manganese solution. If the extraction rate of Mn is decreased, the number of extraction stages can be appropriately reduced. At the same time, the concentration of impurities such as Zn, Al, Ca, Cr, Fe, etc. in the organic phase of nickel-cobalt-manganese loaded DY319 can be decreased, and the concentration of sulfuric acid in the washing stage, the volume ratio with respect to the organic phase, and the number of washing stages, or a combination of at least two, can be appropriately reduced. In the subsequent P204 impurity removal stage, increasing the dilution rate and saponification rate of P204, and the volume ratio of the saponified P204 extraction organic phase to the enriched nickel-cobalt-manganese sulfate phase can increase the extraction rate of P204 to Mn, and also achieve the purpose of reducing the proportion of Mn in the final nickel-cobalt-manganese solution.

The specific examples of the disclosure described above do not constitute limitations on the scope of the disclosure. Any other corresponding changes and modifications made based on the technical concept of the disclosure shall be included within the scope of protection of the claims of the disclosure.

## Claims

1. A short-flow nickel-cobalt-manganese co-extraction process for laterite nickel ore hydrometallurgy, **characterized by** comprising the following steps:
step S1, co-extracting an iron-aluminum removal leaching solution of the laterite nickel ore by using an organic acid extraction system to obtain an enriched nickel-cobalt-manganese solution; and
step S2, extracting impurities from the enriched nickel-cobalt-manganese solution by using a P204 extraction system to obtain a high-purity nickel-cobalt-manganese solution.

2. The short-flow nickel-cobalt-manganese co-extraction process for laterite nickel ore hydro metallurgy according to claim 1, **characterized in that** the iron-aluminum removal leaching solution of the laterite nickel ore is obtained by sequentially subjecting the laterite nickel ore to high-pressure leaching, one-stage neutralization for iron-aluminum removal, and two-stage neutralization for iron-aluminum removal.

3. The short-flow nickel-cobalt-manganese co-extraction process for laterite nickel ore hydro metallurgy according to claim 1, **characterized in that** the iron-aluminum removal leaching solution of the laterite nickel ore comprises the following components: Ni 3.2-4 g/L, Co 0.32-0.48 g/L, Mn 2.6-3.5 g/L, Mg 4-5.2 g/L, Ca 0.1-0.3 g/L, Fe 0-0.001 g/L, Al 0.01-0.03 g/L, Cr 0-0.004 g/L, Sc 0.012-0.035 g/L, Zn 0.015-0.035 g/L, and Cu 0.007-0.016 g/L.

4. The short-flow nickel-cobalt-manganese co-extraction process for laterite nickel ore hydro metallurgy according to claim 1, **characterized in that** the organic acid extraction system comprises an organic acid extractant, a first diluent, and a co-solvent.

5. The short-flow nickel-cobalt-manganese co-extraction process for laterite nickel ore hydro metallurgy according to claim 4, **characterized in that** in the organic acid extraction system, the organic acid extractant is at least one of DY319 or Versatic10; the first diluent is sulfonated coal oil; the co-solvent is at least one of TBP and tridecyl alcohol; the dilution rate of the organic acid extractant is 10-50%, and the volume ratio of the co-solvent to the first diluent is 1: (3-7).

6. The short-flow nickel-cobalt-manganese co-extraction process for laterite nickel ore hydro metallurgy according to claim 1, **characterized in that** the P204 extraction system comprises P204 and a second diluent.

7. The short-flow nickel-cobalt-manganese co-extraction process for laterite nickel ore hydro metallurgy according to claim 6, **characterized in that** in the P204 extraction system, the second diluent is sulfonated coal oil, and the dilution rate of the P204 is 10-50%.

8. The short-flow nickel-cobalt-manganese co-extraction process for laterite nickel ore hydro metallurgy according to claim 1, **characterized in that** the organic acid extraction system or the P204 extraction system is subjected to a saponification treatment before extraction; the saponifying agent is any one of or a combination of at least two of sodium hydroxide, nickel hydroxide, or aqueous ammonia.

9. The short-flow nickel-cobalt-manganese co-extraction process for laterite nickel ore hydro metallurgy according to claim 8, **characterized in that** the saponifying agent is sodium hydroxide solution; the mass fraction of the sodium hydroxide solution is 5-40%; the sodium saponification rate is 30-70%; and the number of saponification stages is 1-2.

10. The short-flow nickel-cobalt-manganese co-extraction process for laterite nickel ore hydro metallurgy according to claim 1, **characterized in that** step S1 specifically comprises:
step S11, co-extracting the iron-aluminum removal leaching solution of the laterite nickel ore by using the organic acid extraction system to obtain a first nickel-cobalt-manganese loaded organic phase;
step S12, washing the first nickel-cobalt-manganese loaded organic phase by using a first washing solution to obtain a second nickel-cobalt-manganese loaded organic phase; and
step S13, stripping the second nickel-cobalt-manganese loaded organic phase by using a first stripping liquid to obtain the enriched nickel-cobalt-manganese solution.

11. The short-flow nickel-cobalt-manganese co-extraction process for laterite nickel ore hydro metallurgy according to claim 10, **characterized in that** in step S11, the phase ratio O: A is 1: (0.5-5); the extraction temperature is 20-60°C; the extraction time is 2-15 min; and the number of extraction stages is 2-10.

12. The short-flow nickel-cobalt-manganese co-extraction process for laterite nickel ore hydro metallurgy according to claim 10, **characterized in that** in step S12, the first washing solution is a sulfuric acid solution with a concentration of 0.1-0.5 mol/L; the phase ratio O: A is (3-12): 1; the washing temperature is 20-60°C; the washing time is 5-30 min; and the number of washing stages is 2-9.

13. The short-flow nickel-cobalt-manganese co-extraction process for laterite nickel ore hydro metallurgy according to claim 10, **characterized in that** in step S12, the first washing solution is combined with the iron-aluminum removal leaching solution of the laterite nickel ore in the co-extraction stage of the organic acid extraction system to realize the extraction and recovery of nickel-cobalt-manganese from the first washing solution.

14. The short-flow nickel-cobalt-manganese co-extraction process for laterite nickel ore hydro metallurgy according to claim 10, **characterized in that** in step S13, the first stripping liquid is a sulfuric acid solution with a concentration of 1-3 mol/L; the phase ratio O: A is (1-35): 1, the stripping temperature is 20-60°C; the stripping time is 3-30 min; and the number of stripping stages is 3-8.

15. The short-flow nickel-cobalt-manganese co-extraction process for laterite nickel ore hydro metallurgy according to claim 1, **characterized in that** in step S2, the phase ratio O: A is 1: (0.2-2); the extraction temperature is 20-60°C; the extraction time is 2-15 min; and the number of extraction stage is 2-13.

16. The short-flow nickel-cobalt-manganese co-extraction process for laterite nickel ore hydro metallurgy according to claim 1, **characterized in that** step S2 further comprises:
washing the loaded organic phase with a second washing solution.

17. The short-flow nickel-cobalt-manganese co-extraction process for laterite nickel ore hydro metallurgy according to claim 16, **characterized in that** in step S2, the second washing solution is a hydrochloric acid solution with a concentration of 0.5-2 mol/L; the phase ratio O: A is (3-13): 1; the washing temperature is 20-60°C; the washing time is 5-30 min; and the number of washing stages is 3-8.
